# DEMANDE DE BREVET EUROPEEN

(11) **EP 2 048 632 A1**
(43) Date de publication de la demande: **15.04.2009**
(21) Numéro de dépôt: 08166405.4
(22) Date de dépôt: 10.10.2008
(51) Int. Cl.: G07F 7/10

(54) **Procédé de transmission d'un code confidentiel, terminal lecteur de cartes, serveur de gestion et produits programme d'ordinateur correspondants**

(30) Priorité: 12.10.2007 FR 0758294
(71) Demandeur: Compagnie Industrielle et Financiere d'Ingenierie "Ingenico", 92200 Neuilly sur Seine (FR)
(72) Inventeur: Naccache, David, 75018, Paris (FR)
(74) Mandataire: Bioret, Ludovic

(57) **Abrégé**

L'invention concerne un procédé de transmission d'un code confidentiel d'une nouvelle carte à microprocesseur détenue par un utilisateur.

Selon l'invention, ledit procédé comprend les étapes suivantes :
- insertion par ledit utilisateur de ladite nouvelle carte dans un terminal lecteur de cartes ;
- émission d'une requête d'obtention dudit code confidentiel par ledit terminal lecteur de cartes vers un serveur de gestion ;
- transmission par ledit serveur de gestion, via un réseau de communication, dudit code confidentiel ou d'une information permettant d'obtenir ledit code confidentiel, vers un terminal de communication dudit utilisateur.

## Description

### 1. Domaine de l'invention

Le domaine de l'invention est celui des cartes à microprocesseur nécessitant la fourniture d'un code confidentiel pour leur mise en oeuvre.

Plus précisément, l'invention concerne la transmission de ce code confidentiel à un utilisateur d'une nouvelle carte.

L'invention s'applique ainsi aux techniques selon lesquelles une nouvelle carte est fournie à l'utilisateur indépendamment de son code confidentiel, pour des raisons de sécurité. Il peut par exemple s'agir de cartes de paiement fournies par les organismes bancaires.

### 2. Art antérieur

Les cartes à microprocesseur, dites cartes à puce, sont connues et sont actuellement utilisées largement. Lorsqu'une carte à puce est utilisée comme carte de paiement, l'utilisateur autorisé ou le titulaire de la carte à puce, que l'on appellera par la suite « l'utilisateur », peut l'utiliser par exemple pour régler des achats ou pour effectuer un retrait de billets à un distributeur automatique de billets (DAB).

Les organismes bancaires (émetteur) envoient de manière régulière à leurs clients, tous les deux ans par exemple, une nouvelle carte de paiement qui est destinée à remplacer leur carte de paiement actuelle (ancienne carte).

Avant son envoi, chaque nouvelle carte de paiement est personnalisée de manière à y enregistrer des informations qui vont permettre son utilisation par l'utilisateur. Il s'agit à la fois des données d'authentification propres à l'émetteur de la carte et des informations d'identification et d'authentification de l'utilisateur (nom, numéro de carte, date de validité, etc). Une nouvelle carte de paiement est de manière connue transmise par courrier à son utilisateur ou à une agence bancaire dans laquelle l'utilisateur pourra la retirer.

Les cartes de paiement sont généralement utilisées avec un code confidentiel. Le code confidentiel associé à la carte de paiement est, de manière générale, généré par l'organisme qui personnalise la carte. De manière connue, un nouveau code confidentiel, associé à une nouvelle carte de paiement, est expédié dans un courrier sécurisé, dit « mailer », dont les caractéristiques empêchent quiconque de lire le code confidentiel par transparence ou d'ouvrir le « mailer » sans laisser de traces irréversibles.

Le courrier comportant la nouvelle carte de paiement et le « mailer » ne sont pas envoyés simultanément de façon à diminuer le risque qu'une personne malveillante n'intercepte à la fois la carte de paiement et le code confidentiel associé.

Cette approche n'est bien sûr pas limitée aux cartes de paiement, mais s'applique également à la plupart des systèmes mettant en oeuvre des cartes à puce, par exemple pour l'authentification de l'utilisateur, pour accéder à un service, ou à un local.

### 3. Inconvénients de l'art antérieur

Un inconvénient est que l'impression et l'envoi d'un « mailer » engendre des coûts à l'émetteur de la carte de paiement qu'il serait souhaitable de minimiser. En effet, ce « mailer » comprend généralement un papier spécial, avec plusieurs épaisseurs, une pièce de protection recouvrant la zone sur laquelle le code est inscrit, des éléments prédécoupés,...

De plus, il existe un risque qu'une personne malveillante réussisse à subtiliser le « mailer » envoyé par courrier.

Un autre inconvénient de cet envoi séparé tient au fait que l'utilisateur est tributaire des temps de transferts postaux et qu'il doit attendre la réception du « mailer » avant de pouvoir utiliser sa nouvelle carte de paiement.

### 4. Objectifs de l'invention

L'invention a notamment pour objectif de pallier ces inconvénients de l'art antérieur.

Plus précisément, un objectif de l'invention est de garantir une meilleure sécurité lors de la remise à un utilisateur d'une nouvelle carte de paiement et d'un nouveau code confidentiel associé à cette carte.

L'invention a également pour objectif de minimiser les coûts pour l'utilisateur et/ou les organismes bancaires et d'améliorer la sécurité et la simplicité en limitant les envois de courrier.

L'invention a encore pour objectif de faciliter l'activation de la carte de paiement, tout en réduisant le risque qu'une personne malveillante n'active la carte de paiement en lieu et place de l'utilisateur.

### 5. Résumé de l'invention

L'invention propose une solution nouvelle qui ne présente pas l'ensemble de ces inconvénients de l'art antérieur, sous la forme d'un procédé de transmission d'un code confidentiel d'une nouvelle carte à microprocesseur détenue par un utilisateur.

Selon l'invention, ledit procédé comprend les étapes suivantes :
- insertion par ledit utilisateur de ladite nouvelle carte dans un terminal lecteur de cartes ;
- émission d'une requête d'obtention dudit code confidentiel par ledit terminal lecteur de cartes vers un serveur de gestion ;
- transmission par ledit serveur de gestion, via un réseau de communication, dudit code confidentiel ou d'une information permettant d'obtenir ledit code confidentiel, vers un terminal de communication dudit utilisateur.

Ainsi, le procédé selon l'invention permet à un titulaire d'une nouvelle carte de paiement de recevoir le nouveau code confidentiel associé à cette carte par le biais d'un terminal de communication. La transmission du code confidentiel est initiée par l'insertion de la nouvelle carte de paiement dans un terminal lecteur de carte, qui peut être un terminal de paiement situé chez un commerçant.

Un tel procédé évite l'impression et l'envoi d'un « mailer » par l'organisme émetteur de la carte de paiement, minimise les risques liés à la transmission du code confidentiel à l'utilisateur de la carte de paiement et s'avère simple et pratique pour l'utilisateur et l'émetteur de la nouvelle carte de paiement.

Selon une mise en oeuvre préférentielle, le procédé selon l'invention comprend une étape d'insertion par ledit utilisateur d'une ancienne carte, destinée à être remplacée par ladite nouvelle carte, dans un terminal lecteur de cartes.

L'insertion de l'ancienne carte de paiement, destinée à être remplacée par la nouvelle carte de paiement, dans le terminal de paiement, permet ainsi de réduire la probabilité qu'une personne malveillante, qui aurait intercepté la nouvelle carte de paiement, puisse recevoir le nouveau code confidentiel associé. En effet, un porteur d'une nouvelle carte de paiement (l'utilisateur autorisé ou un fraudeur) ne peut se voir transmettre le nouveau code confidentiel associé sans avoir en sa possession l'ancienne carte de paiement qui est destinée à être remplacée par la nouvelle.

Selon une autre caractéristique préférentielle, ladite étape d'insertion d'une ancienne carte est requise par ledit terminal lecteur de cartes, après ladite étape d'insertion de ladite nouvelle carte.

Ainsi, le procédé selon l'invention requiert l'insertion séquentielle de la nouvelle carte de paiement puis de l'ancienne carte de paiement. Une fois que l'ancienne carte de paiement a été insérée dans le terminal de paiement, et éventuellement que le code confidentiel associé à cette ancienne carte de paiement a été correctement saisi sur le clavier du terminal de paiement, le code confidentiel associé à la nouvelle carte de paiement peut être transmis vers un terminal de communication de l'utilisateur.

Selon un mode de réalisation particulier, ladite étape de transmission est différée d'un laps de temps prédéterminé, après réception de ladite requête d'obtention.

Ainsi, la transmission du code confidentiel à l'utilisateur de la nouvelle carte de paiement peut être retardée de manière que l'utilisateur puisse prendre connaissance du code confidentiel en toute sécurité dans un lieu autre que le commerce où le terminal de paiement se trouve. Ceci évite qu'une personne malveillante puisse prendre connaissance du code confidentiel transmis à l'insu de l'utilisateur, pendant qu'il est en train de faire les manipulations d'initialisation (insertion de la nouvelle et de l'ancienne cartes).

Selon un autre aspect particulier, ledit code confidentiel ou ladite information permettant d'obtenir ledit code confidentiel est transmis sous la forme d'un message SMS, d'un message vocal ou d'un courriel.

L'envoi d'un « mailer » est ainsi remplacé par une transmission électronique du code confidentiel vers un terminal de communication de l'utilisateur, qui peut être un téléphone portable ou un ordinateur par exemple, garantissant une réception rapide et peu coûteuse du code confidentiel par l'utilisateur.

Selon encore une autre caractéristique, ladite étape de transmission comprend une opération de cryptage dudit code confidentiel ou de ladite information permettant d'obtenir ledit code confidentiel.

Le cryptage du code confidentiel lors de sa transmission à l'utilisateur garantit la meilleure sécurité possible et diminue le risque qu'une personne malveillante puisse s'approprier le code confidentiel pendant sa transmission vers le terminal de communication de l'utilisateur.

Selon un mode de réalisation particulier, ladite opération de cryptage tient compte d'un identifiant dudit terminal de communication et/ou du code confidentiel de ladite ancienne carte.

Selon un aspect particulier, compatible avec les précédents, le procédé comprend une étape d'activation de ladite nouvelle carte, par ledit serveur de gestion.

Le procédé selon l'invention inclut ainsi une étape d'activation de la nouvelle carte de paiement par le serveur de gestion qui, dès lors que le code confidentiel a été transmis l'utilisateur, permet son utilisation pour effectuer des transactions.

Selon un autre aspect particulier, le procédé comprend une étape de désactivation de ladite ancienne carte, par ledit serveur de gestion et/ou par ledit terminal lecteur de cartes.

Ainsi, suite à cette étape, l'utilisateur ou une personne malveillante ne peut plus utiliser l'ancienne carte de paiement pour effectuer des transactions.

Selon une mise en oeuvre préférentielle, l'étape de désactivation est mise en oeuvre lors de la première utilisation de ladite nouvelle carte.

La désactivation de l'ancienne carte de paiement n'étant effective que suite à la première utilisation de la nouvelle carte de paiement (donc à partir du moment où le nouveau code a effectivement été reçu), l'utilisateur a ainsi toujours en sa possession une carte de paiement activée qui lui permet d'effectuer des transactions.

Selon un autre aspect, l'invention concerne un terminal lecteur de cartes pour la mise en oeuvre du procédé de transmission d'un code confidentiel d'une nouvelle carte à microprocesseur détenue par un utilisateur.

Selon l'invention, un tel terminal lecteur de cartes comprend :
- des moyens de lecture et détection d'une nouvelle carte ;
- des moyens d'émission d'une requête d'obtention dudit code confidentiel vers un serveur de gestion.

Ainsi, le terminal lecteur de cartes, qui est par exemple situé chez un commerçant ou prestataire de services, peut détecter la présence d'une nouvelle carte et émettre une requête d'obtention du code confidentiel associé à cette nouvelle carte vers un serveur de gestion.

Selon une mise en oeuvre préférentielle, le terminal lecteur de cartes selon l'invention comprend des moyens de requête d'insertion d'une ancienne carte, destinée à être remplacée par ladite nouvelle carte.

Selon un autre aspect, l'invention concerne un serveur de gestion pour la mise en oeuvre du procédé de transmission d'un code confidentiel d'une nouvelle carte à microprocesseur détenue par un utilisateur.

Selon l'invention, un tel serveur de gestion comprend :
- des moyens de réception d'une requête d'obtention dudit code confidentiel émise par un terminal lecteur de cartes ;
- des moyens de transmission, via un réseau de communication, dudit code confidentiel ou d'une information permettant d'obtenir ledit code confidentiel, vers un terminal de communication dudit utilisateur.

Ainsi, le serveur de gestion transmet un code confidentiel associé à une nouvelle carte vers un terminal de communication de l'utilisateur en réponse à la réception d'une requête d'obtention du code confidentiel par un terminal lecteur de cartes.

Encore un autre aspect de l'invention concerne des produits programme d'ordinateur téléchargeable depuis un réseau de communication et/ou stocké sur un support lisible par ordinateur et/ou exécutable par un microprocesseur, permettant l'exécution des étapes correspondantes respectivement dans le terminal lecteur de cartes et le serveur de gestion.

### 6. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente schématiquement un exemple de système mettant en oeuvre un procédé de transmission d'un code confidentiel selon un mode de réalisation particulier de l'invention ;
- la figure 2 présente les étapes principales du procédé de transmission d'un code confidentiel selon le mode de réalisation de la figure 1.

### 7. Description d'un mode de réalisation de l'invention

Le principe général de l'invention repose sur la transmission sécurisée, par voie électronique, d'un code confidentiel d'une nouvelle carte à microprocesseur détenue par un utilisateur.

Plus précisément, le procédé de l'invention permet de fournir à l'utilisateur le code confidentiel associé à sa nouvelle carte par le biais d'un terminal de communication, par exemple un téléphone numérique, suite à l'insertion de la nouvelle carte dans un terminal lecteur de cartes prévu à cet effet.

En particulier, un tel procédé permet la transmission du code confidentiel à l'utilisateur sous la forme d'un message SMS, d'un message vocal ou d'un courriel.

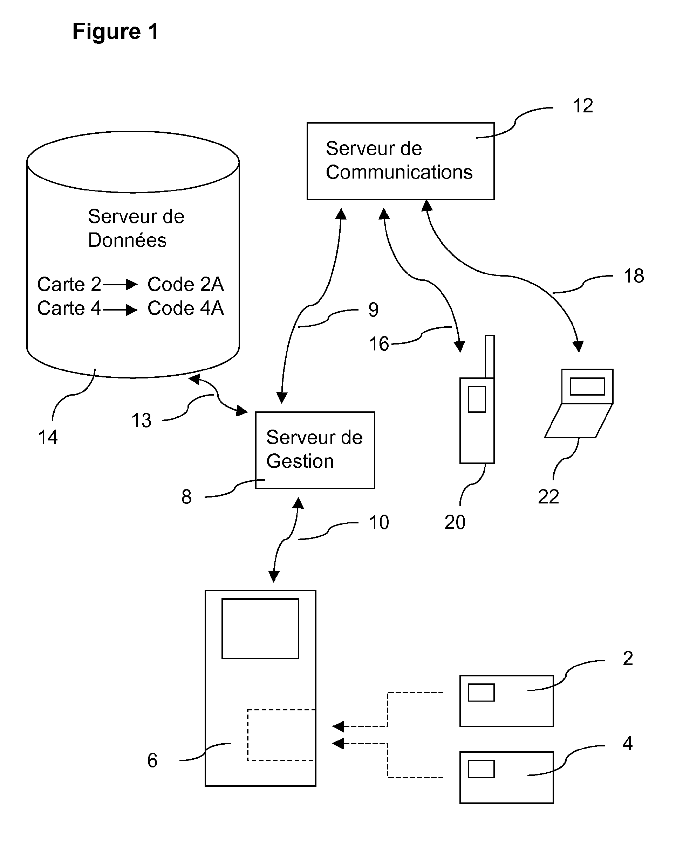

On présente maintenant en relation avec la figure 1 un système mettant en oeuvre un tel procédé selon un mode de réalisation particulier de l'invention.

On considère dans cet exemple qu'un utilisateur d'une nouvelle carte à microprocesseur (carte à puce) 2, par exemple une nouvelle carte de paiement émise par un organisme bancaire (émetteur). Il souhaite activer la nouvelle carte de paiement 2 qu'il a préalablement reçue, par voie postale ou par tout autre moyen.

La nouvelle carte de paiement 2 est, à sa réception par l'utilisateur, dans un état désactivée. Elle est destinée à remplacer l'ancienne carte de paiement 4, que possède l'utilisateur et qui est elle activée. On entend par carte « désactivée », dans le présent exemple, une carte qui n'est pas associée à un client de l'organisme bancaire et qui ne peut donc pas être utilisée pour effectuer un paiement par le biais d'un terminal de paiement ou un retrait de billets auprès d'un DAB.

Un terminal lecteur de cartes, qui peut être un terminal de paiement 6, se trouve situé par exemple chez un commerçant ou un prestataire de services. Le terminal de paiement 6 est connecté à un serveur de gestion 8 distant, géré par un organisme bancaire, via un réseau de communication 10 qui permet l'échange d'informations entre le terminal de paiement 6 et le serveur 8 de l'organisme bancaire.

Le serveur 8 distant de l'organisme bancaire autorise entre autres des transactions électroniques sécurisées et peut être connecté à plusieurs terminaux de paiement (non représentés). L'organisme bancaire gère, à l'aide d'une base de données d'un serveur de données sécurisé 14, auquel il peut accéder via un accès 13, une liste d'identifiants de cartes de paiement. Dans cette base de données, chaque identifiant d'une carte de paiement, qui est un numéro de carte par exemple, est associé à un code confidentiel et/ou à des données dérivées du code confidentiel.

On entend par code confidentiel par exemple le numéro d'identification personnel (NIP) du titulaire d'une carte de paiement, que l'on appelle aussi PIN (en anglais « Personal Identification Number ») ou code secret. Le code confidentiel associé à une carte de paiement est généralement composé d'une suite de quatre chiffres.

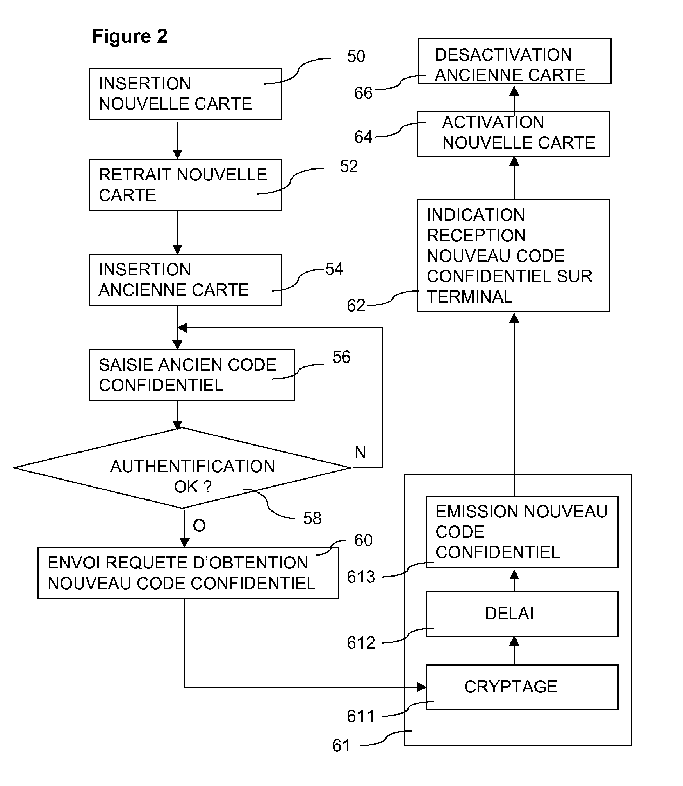

On suppose dans ce mode de réalisation que chaque carte de paiement 2, 4, respectivement désactivée et activée, est associée à un code confidentiel distinct, respectivement un code confidentiel 2A et un code confidentiel 4A, dans la base de données du serveur de données 14. Avant la mise en oeuvre du procédé de l'invention, l'utilisateur des cartes de paiement 2, 4 connaît seulement le code confidentiel 4A associé à l'ancienne carte de paiement 4. Le procédé selon l'invention, qui sera détaillée en relation avec la figure 2, vise à transmettre à l'utilisateur le code confidentiel 2A associé à la nouvelle carte de paiement 2 de manière simple et sécurisée, en s'affranchissant de l'utilisation d'un « mailer ».

Le serveur 8 de l'organisme bancaire est connecté à un serveur de communication 12 via un accès 9. Ainsi, un code confidentiel stocké dans la base de données du serveur de données 14 peut être transmis du serveur 8 de l'organisme bancaire au serveur de communication 12, qui peut à son tour le transmettre à un terminal de communication 20, 22 de l'utilisateur (des cartes de paiement 2, 4) par le biais d'un réseau de communication.

Le réseau de communication est par exemple un réseau informatique 16 ou un réseau de télécommunication 18. Notamment, le code confidentiel 2A peut être transmis par SMS, ou par courriel.

Préférentiellement, la transmission se fait sous une forme sécurisée, par exemple cryptée.

Alternativement, ce n'est pas le code confidentiel 2A lui-même qui est transmis, mais une information permettant d'obtenir ce code confidentiel 2A, par exemple en le combinant selon un algorithme prédéterminé avec le numéro de téléphone de l'utilisateur, son numéro de compte, un mot de passe et/ou l'ancien code confidentiel 4A. Dans ce cas, le terminal de communication 20, 22 est capable d'extraire le code confidentiel 2A de cette information en effectuant l'algorithme inverse.

Le réseau de télécommunication 16 peut être basé sur le standard GSM (en anglais « Global System for Mobile Communications »), GPRS (en anglais « Global Packet Radio Service »), UMTS (en anglais « Universal Mobile Communications System ») ou tout autre standard. Le réseau informatique 18 peut être le réseau Internet. Ces deux réseaux permettent l'envoi du code confidentiel 2A vers le terminal de communication 20, 22 de l'utilisateur par le biais d'un message SMS (en anglais « Short Message Service »), d'un message MMS (en anglais « Multimedia Messaging Service »), d'un courriel ou d'un message vocal par exemple.

Dans ce mode de réalisation, le terminal de communication 20, 22 sur lequel le client peut visualiser le code confidentiel 2A peut être un radiotéléphone, un ordinateur de poche (un assistant personnel par exemple), un ordinateur portable, un micro-ordinateur, etc.

Dans une variante de réalisation, le serveur 8 de l'organisme bancaire et le serveur de communication 12 sont intégrés dans un même serveur de gestion.

On présente ci-dessous, en relation avec la figure 2, les étapes principales du procédé de transmission d'un code confidentiel selon le mode de réalisation précité de l'invention.

Dans un premier temps, lors de l'étape 50, l'utilisateur insère la nouvelle carte de paiement 2 qu'il a reçu récemment dans le terminal de paiement 6 situé chez un commerçant. Le terminal de paiement 6 est capable de lire et de détecter, seul ou en coopération avec le serveur 8 de l'organisme bancaire, qu'il s'agit là d'une nouvelle carte de paiement désactivée. Il demande en retour à l'utilisateur, par le biais d'un écran de visualisation (non représenté) ou d'une autre interface, par exemple vocale, de retirer la nouvelle carte de paiement 2 du terminal de paiement 6 et d'insérer l'ancienne carte de paiement 4 activée, qui est destinée à être remplacée par la nouvelle carte de paiement 6.

Une fois la nouvelle carte de paiement 2 retirée (étape 52), et l'ancienne carte de paiement 4 insérée dans le terminal de paiement 6 (étape 54), le terminal de paiement 6 peut requérir que l'utilisateur compose, par le biais d'un clavier numérique (non représenté) du terminal de paiement 6, le code confidentiel associé à l'ancienne carte de paiement 4 (étape 56). De manière connue, il est ensuite vérifié dans le terminal de paiement 6 que le code confidentiel introduit au clavier est correct, en fonction d'informations secrètes (4A) mémorisées dans la carte de paiement 4 (étape 58).

Dans le cas où le code est correct, le terminal de paiement 6 émet vers le serveur 8 distant de l'organisme bancaire, via le réseau de communication 10, une requête d'obtention du code confidentiel de la nouvelle carte de paiement 2 (étape 60).

Dans le cas où le serveur 8 ne connaît pas l'adresse ou le numéro (qui a pu être donné par exemple lors de l'ouverture du compte) auquel doit être transmis le nouveau code confidentiel 2A, une procédure peut être prévue pour permettre à l'utilisateur de le fournir, éventuellement avec une procédure de contrôle. On peut également prévoir que l'utilisateur indique le délai qu'il souhaite que le serveur 8 applique avant la transmission.

Le serveur 8 comprend des moyens de réception de la requête émise par le terminal de paiement 6. En réponse à cette requête, le serveur 8 récupère le code confidentiel 2A, associé à la nouvelle carte de paiement 2, qui est stocké dans la base de données du serveur de données 14. Le serveur 8 de l'organisme bancaire transmet ensuite le code confidentiel 2A au serveur de communication 12 qui peut à son tour le transmettre, par le biais du réseau informatique 16 ou du réseau de télécommunication 18, au terminal de communication 20, 22 de l'utilisateur (étape 61).

Le terminal de communication 20, 22 peut recevoir un message pour indiquer à l'utilisateur (étape 62), que le nouveau code confidentiel 2A est accessible par l'utilisateur, ou que la transmission est en cours. Cette indication peut être visuelle, sonore et/ou tactile.

La transmission 613 peut être sécurisée (611) par cryptage notamment et/ou différée (612).

Selon une variante, le terminal de paiement 6 ne requiert pas la saisie du code confidentiel associé à l'ancienne carte de paiement 4, et le procédé selon l'invention passe donc directement de l'étape 54 (insertion de l'ancienne carte de paiement 4 dans le terminal de paiement 6) à l'étape 60 (émission d'une requête d'obtention du code confidentiel 2A par le terminal de paiement 6).

Aux étapes suivantes 64 et 66, respectivement, la nouvelle carte de paiement 2 est activée par le serveur 8 de l'organisme bancaire et l'ancienne carte de paiement 4 est désactivée par le serveur 8 de l'organisme bancaire et/ou par le terminal de paiement 6, de manière (quasi-)simultanée ou séquentiellement.

Il est toutefois intéressant que la nouvelle carte de paiement 2 soit activée avant que l'ancienne carte de paiement 4 soit désactivée, de manière à ce que l'utilisateur est toujours au moins une carte activée en sa possession pour un aspect pratique évident. Ainsi, la désactivation de l'ancienne carte de paiement 4 peut être mise en oeuvre lors de la première utilisation de la nouvelle carte de paiement 2, quand l'utilisateur effectue un paiement dans un commerce par exemple par le biais d'un terminal de paiement.

Selon une variante de ce mode de réalisation, la transmission du code confidentiel 2A vers le terminal de communication 20, 22 de l'utilisateur, après réception par le serveur 8 de la requête d'obtention émise par le terminal de paiement 6, est différée (612) d'un laps de temps prédéterminé pour des raisons de sécurité. Ce délai peut éventuellement être introduit par l'utilisateur par le biais du clavier du terminal de paiement 6 ou par le biais du terminal de communication 20,22.

Dans ce cas, la désactivation de l'ancienne carte de paiement 4 est différée d'au moins ce laps de temps.

Selon une autre variante, le procédé selon l'invention passe à l'étape 66 (désactivation de l'ancienne carte de paiement 4) une fois que l'ouverture du message comprenant le code confidentiel 2A est détectée par le terminal de communication 20, 22 et/ou une fois que l'utilisateur active un indicateur de lecture du message comprenant le code confidentiel 2A sur le terminal de communication 20, 22.

Il est à noter que l'étape de désactivation 66 pourrait alternativement être effectuée avant l'étape de transmission du nouveau code 61.

Selon une variante, une information permettant d'obtenir le code confidentiel 2A est transmise au terminal de communication 20, 22 de l'utilisateur. Le terminal de communication 20, 22 comprend dans ce cas des moyens permettant de dériver le code confidentiel 2A à partir de l'information reçue.

Selon une autre variante, pouvant être complémentaire ou non à la précédente, le code confidentiel 2A ou l'information permettant d'obtenir le code confidentiel 2A peut être transmis au terminal de communication 20, 22 de l'utilisateur de manière cryptée (611). Dans ce cas, le code confidentiel 2A ou l'information permettant d'obtenir le code confidentiel 2A peut être crypté(e) avec un identifiant (numéro de téléphone, adresse IP, etc) du terminal de communication 20, 22 ou un identifiant de l'ancienne carte de paiement 4 (code confidentiel 4A, etc) par exemple. Dans ce cas, le terminal de communication 20, 22 comprend des moyens de décryptage du message transmis connus de l'homme du métier.

Selon une autre variante de ce mode de réalisation, le procédé de l'invention ne fait pas intervenir l'étape d'insertion de l'ancienne carte de paiement 2, et s'affranchit donc des étapes 54 à 58 (ou des étapes 52 à 58) de la figure 2.

Il peut ainsi être envisagé que le terminal de paiement 6 comporte une fonction activable par un utilisateur (une touche du clavier par exemple) qui permette l'initiation du procédé de transmission d'un code confidentiel suite à l'insertion d'une nouvelle carte de paiement dans le terminal de paiement 6.

Il est à noter que le procédé de l'invention peut être mis en oeuvre dans un terminal de paiement, ou plus généralement de lecture de cartes, de type classique, dès lors qu'il met en oeuvre un programme informatique adaptée, apte à mettre en oeuvre le procédé décrit ci-dessus. Ce programme peut être présent dès l'origine, dans une mémoire du terminal, ou téléchargé lors d'une mise à jour, depuis un support tel qu'un CD-ROM ou via un serveur.

Dans certains modes de réalisation, on peut prévoir que le terminal est un appareil dédié à l'initialisation de nouvelles cartes, installé par exemple dans une agence bancaire.

## Revendications

1. Procédé de transmission d'un code confidentiel d'une nouvelle carte à microprocesseur détenue par un utilisateur,
**caractérisé en ce qu'**il comprend les étapes suivantes :
- insertion par ledit utilisateur de ladite nouvelle carte dans un terminal lecteur de cartes ;
- émission d'une requête d'obtention dudit code confidentiel par ledit terminal lecteur de cartes vers un serveur de gestion ;
- transmission par ledit serveur de gestion, via un réseau de communication, dudit code confidentiel ou d'une information permettant d'obtenir ledit code confidentiel, vers un terminal de communication dudit utilisateur.

2. Procédé selon la revendication 1, **caractérisé en ce qu'**il comprend une étape de :
- insertion par ledit utilisateur d'une ancienne carte, destinée à être remplacée par ladite nouvelle carte, dans un terminal lecteur de cartes.

3. Procédé selon la revendication 2, **caractérisé en ce que** ladite étape d'insertion d'une ancienne carte est requise par ledit terminal lecteur de cartes, après ladite étape d'insertion de ladite nouvelle carte.

4. Procédé selon l'une quelconque des revendications 1 à 3, **caractérisé en ce que** ladite étape de transmission est différée d'un laps de temps prédéterminé, après réception de ladite requête d'obtention.

5. Procédé selon l'une quelconque des revendications 1 à 4, **caractérisé en ce que** ledit code confidentiel ou ladite information permettant d'obtenir ledit code confidentiel est transmis sous la forme d'un message SMS, d'un message vocal ou d'un courriel.

6. Procédé selon l'une quelconque des revendications 1 à 5, **caractérisé en ce que** ladite étape de transmission comprend une opération de cryptage dudit code confidentiel ou de ladite information permettant d'obtenir ledit code confidentiel.

7. Procédé selon la revendication 6, **caractérisé en ce que** ladite opération de cryptage tient compte d'un identifiant dudit terminal de communication et/ou du code confidentiel de ladite ancienne carte.

8. Procédé selon l'une quelconque des revendications 1 à 7, **caractérisé en ce qu'**il comprend une étape de :
- activation de ladite nouvelle carte, par ledit serveur de gestion.

9. Procédé selon l'une quelconque des revendications 2 à 8, **caractérisé en ce qu'**il comprend une étape de :
- désactivation de ladite ancienne carte, par ledit serveur de gestion et/ou par ledit terminal lecteur de cartes.

10. Procédé selon la revendication 9, **caractérisé en ce que** ladite étape de désactivation est mise en oeuvre lors de la première utilisation de ladite nouvelle carte.

11. Terminal lecteur de cartes pour la mise en oeuvre du procédé de transmission d'un code confidentiel d'une nouvelle carte à microprocesseur détenue par un utilisateur selon l'une quelconque des revendications 1 à 10, **caractérisé en ce qu'**il comprend :
- des moyens de lecture et détection d'une nouvelle carte ;
- des moyens d'émission d'une requête d'obtention dudit code confidentiel vers un serveur de gestion.

12. Terminal lecteur de cartes selon la revendication 11, **caractérisé en ce qu'**il comprend des moyens de requête d'insertion d'une ancienne carte, destinée à être remplacée par ladite nouvelle carte.

13. Serveur de gestion pour la mise en oeuvre du procédé de transmission d'un code confidentiel d'une nouvelle carte à microprocesseur détenue par un utilisateur selon l'une quelconque des revendications 1 à 10, **caractérisé en ce qu'**il comprend :
- des moyens de réception d'une requête d'obtention dudit code confidentiel émise par un terminal lecteur de cartes ;
- des moyens de transmission, via un réseau de communication, dudit code confidentiel ou d'une information permettant d'obtenir ledit code confidentiel, vers un terminal de communication dudit utilisateur.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution sur un terminal lecteur de cartes du procédé de transmission d'un code confidentiel d'une nouvelle carte à microprocesseur détenu par un utilisateur selon l'une quelconque des revendications 1 à 10, comprenant :
- des moyens de lecture et détection d'une nouvelle carte ;
- des moyens d'émission d'une requête d'obtention dudit code confidentiel vers un serveur de gestion.

15. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution sur un serveur de gestion du procédé de transmission d'un code confidentiel d'une nouvelle carte à microprocesseur détenu par un utilisateur selon l'une quelconque des revendications 1 à 10, comprenant :
- des moyens de réception d'une requête d'obtention dudit code confidentiel émise par un terminal lecteur de cartes ;
- des moyens de transmission, via un réseau de communication, dudit code confidentiel ou d'une information permettant d'obtenir ledit code confidentiel, vers un terminal de communication dudit utilisateur.
